# EUROPÄISCHE PATENTANMELDUNG

(11) **EP 4 386 021 A1**
(43) Veröffentlichungstag der Anmeldung: **19.06.2024**
(21) Anmeldenummer: 22213433.0
(22) Anmeldetag: 14.12.2022
(51) Int. Cl.: C08F 290/06, C09J 4/00, C09J 4/06, B32B 17/10, E06B 3/663

(54) **VERBUNDELEMENT FÜR EINE ISOLIERGLASSCHEIBE**

(71) Anmelder: Sika Technology AG, 6340 Baar (CH)
(72) Erfinder: Dick, Matthias, 5621 Zufikon (CH); Storrer, Denise, 8048 Zürich (CH); Langenegger, Marcel, 8908 Hedingen (CH)
(74) Vertreter: Sika Patent Attorneys

(57) **Zusammenfassung**

Die vorliegende Erfindung betrifft ein Verbundelement (10), insbesondere ein Verbundelement (10) für eine Isolierglasscheibe, wenigstens umfassend ein erstes Scheibenelement (20) und wenigstens ein zweites Scheibenelement (22) sowie wenigstens ein erstes Profilelement (30), wobei das Profilelement (30) wenigstens eine erste Verbindefläche (32) und/oder wenigstens eine zweite Verbindefläche (33) aufweist, wobei die erste und/oder die zweite Verbindefläche (32, 33) zur Applizierung und/oder Aufnahme eines ersten Verbindemittels (40) vorgesehen und beschaffen ist, wobei benachbart zur ersten Verbindefläche (32) eine dritte Verbindefläche (34) zur Applizierung und/oder Aufnahme eines zweiten Verbindemittels (50) und/oder benachbart zu zweiten Verbindefläche (33) eine vierte Verbindefläche (35) zur Applizierung und/oder Aufnahme eines zweiten Verbindemittels (50) vorgesehen ist und wobei das erste Scheibenelement (20) und das zweite Scheibenelement (22) mittels des Profilelementes (30) und des ersten Verbindemittels (40) und/oder des zweiten Verbindemittels (50) verbindbar oder verbunden sind, wobei das erste Verbindemittel (40) ein zweikomponentiger (Meth)acrylatklebstoff ist, dadurch gekennzeichnet, dass der zweikomponentige (Meth)acrylatklebstoff mindestens zwei ausgewählte Meth(acrylat)-Monomere in spezifischen Anteilen und spezifischem Massenverhältnis zueinander enthält.

Des Weiteren betrifft die vorliegende Erfindung eine Isolierglasscheibe (100), ein Profilelement (30), ein Fenster, eine Tür sowie ein Verfahren zur Herstellung eines Verbundelementes bzw. einer Isolierglasscheibe (100).

## Beschreibung

### Technisches Gebiet

Die vorliegende Erfindung betrifft ein Verbundelement, insbesondere ein Verbundelement für eine Isolierglasscheibe, eine Isolierglasscheibe, ein Profilelement, ein Fenster, eine Tür sowie ein Verfahren zur Herstellung eines Verbundelementes bzw. einer Isolierglasscheibe.

### Stand der Technik

Aus dem Stand der Technik sind bereits Isolierglasscheiben bekannt.

Mehrscheiben-Isolierglas (MIG), auch als Wärmedämmverglasung oder Isolierverglasung bezeichnet, ist ein aus mindestens zwei Glasscheiben zusammengesetztes Bauelement für z. B. Fenster. Zwischen den Scheiben befindet sich ein Hohlraum, der luftdicht verschlossen ist und der Wärmedämmung dient. Vorläufer waren die Doppelverglasung ohne Luftabschluss, das so genannte Verbundfenster und die doppelte Einzelverglasung beim Kastenfenster oder Winterfenster.

Die Isolierverglasung ist im Gegensatz zu sonstigen wärmedämmenden Verglasungsarten ein eigenständiges System, welches zur Funktionstüchtigkeit einen umgebenden Rahmen - in der Regel ein Fensterflügel - nicht benötigt. Erreicht wird dies mittels eines Randverbunds, der die einzelnen Glasscheiben auf Distanz zusammenhält und gleichzeitig den Scheibenzwischenraum hermetisch versiegelt. Im Scheibenzwischenraum befindet sich seit vielen Jahren nicht Luft, sondern beispielsweise meist das besser isolierende Edelgas Argon.

Um die Wärmeleitung einer Isolierglasscheibe zu minimieren, kann der Scheibenzwischenraum vergrößert werden. Da Gase bei zunehmenden Volumen jedoch Wärmemengen nicht nur durch Wärmeleitung (Konduktion), sondern auch durch Luftzug (Konvektion) übertragen, wird ab einem gewissen Scheibenabstand die Wärmedämmung durch das eingeschlossene Gas wieder schlechter. Um dies zu unterbinden, wird üblicherweise eine weitere (dritte) Glasscheibe in das Isolierglas eingebaut.

Der Randverbund hat die Aufgabe, die Glasscheiben auf Distanz mechanisch zusammenzuhalten und zu verhindern, dass Gasfüllung entweicht und statt ihrer Umgebungsluft und Luftfeuchtigkeit eindringen.

Am Beginn der technischen Entwicklung des Zweifach-Isolierglases lötete man einen metallischen Abstandhalter zwischen den beiden Scheiben ein. Eine andere Methode war, den Glasrand zu schmelzen und gleichzeitig zu kröpfen, um auf diese Weise die einzelnen Glasscheiben zu verschweißen.

Seit Jahrzehnten ist jedoch ein zweistufig geklebter Randverbund üblich. Ein 10 bis 20 mm breites Profil aus Aluminium, Edelstahl oder Kunststoff - der sogenannte Abstandhalter - ist beidseitig mit einer klebrigen Schicht Butylkautschuk versehen. Es verbindet die Scheiben nach starkem Zusammenpressen miteinander und stellt zugleich die erste Dichtungsebene dar. Beispielsweise wird in der DE 102 11 940 A1 ein Türblatt aus zwei Glasscheiben beschrieben, bei dem die Glasscheiben über ein an den Rändern der Glasscheiben angeordnetes Profil verbunden sind. Als Haft- und Dampfsperrschicht ist zwischen Profil und Glasscheibe jeweils ein Butylmaterial vorgesehen, dass den Türblattinnenraum gegen von außen eindringende Feuchtigkeit schützen soll.

Nach der Befüllung des Scheibenzwischenraums mit Gas wird die Lücke zwischen dem Umfang des Abstandshalters und den überstehenden Glaskanten mit einer zweiten dauerelastischen Dichtungsebene aus Polyurethan oder speziellen Polysulfiden versehen. Bei Fassadenelementen, die an dieser Stelle UV-Licht ausgesetzt sind, wird Silikon verwendet, das allerdings gasdurchlässiger ist. Ein Beispiel für die Verwendung von Abdichtmassen aus Polysulfid oder Silikon findet sich in der EP 0 852 280 A1, die sich mit Abstandshaltern für Mehrscheiben-Isolierverglasungen befasst. Die dort beschriebenen Abstandhalter zeichnen sich durch eine an der gesamten dem Verglasungsraum abgewandten Verklebungsfläche angebrachte Metallfolie aus.

Der Randverbund gewährleistet die Funktionstüchtigkeit der Isolierglasscheibe nur für einen bestimmten Zeitraum, da die Diffusion von Gasen durch einen geklebten Randverbund nicht völlig vermeidbar ist. Dadurch verschlechtert sich der Wärmedämmwert durch das entweichende Füllgas kontinuierlich - die Vorgabe liegt bei maximal 1 % Gasschwund pro Jahr - und Umgebungsluft sowie Luftfeuchtigkeit dringen ein. In der Literatur wird eine Lebensdauer von 20 bis 30 Jahren genannt. Damit die eindringende Feuchtigkeit nicht als Kondensat im Scheibenzwischenraum anfällt, wird im Abstandhalter ein Trocknungsmittel aus der Materialfamilie der Silicagele oder Molekularsiebe (Zeolithe) eingebracht, wie dies z.B. in der EP 0 228 641 A2 beschrieben wird. Sobald das Trocknungsmittel aufgebraucht ist, beschlägt die Innenseite der Scheibe. Dies wird als "blinde Scheibe" bezeichnet.

Der Randverbund verschlechtert die Wärmedämmung einer Isolierglasscheibe. Der Wärmedurchgangskoeffizient wird bei Isolierglas als Ug-Wert (g = glazing) angegeben und berücksichtigt nicht die Auswirkungen des Randverbunds. Eine Zweifach-Isolierglasscheibe von 1 m × 1 m mit einem herkömmlichen Abstandhalter aus Aluminium (Psi-Wert: 0,068 W/m•K) und einem Ug-Wert von 1,2 W/m²K hätte bei Einbeziehung der Auswirkung des Randverbundes einen U-Wert von: 1,2 W/m²K + (4 m × 0,068 W/m•K) = 1,5 W/m²K

Die Beeinträchtigung des Wärmedämmwertes am Scheibenrand führt bei niedrigen Außentemperaturen auch zum Anfall von Wasserkondensat am rauminneren Scheibenrand. (Da ältere Fensterelemente oft eine hohe Fugendurchlässigkeit aufweisen, wird das Kondensat durch eindringende Kaltluft getrocknet und ist dann nicht bemerkbar.) Durch den Einsatz eines thermisch verbesserten Randverbunds - die sogenannte Warme Kante mit Psi-Werten von 0,03 W/m•K bis 0,05 W/m•K - tritt der Kondensatanfall je nach Psi-Wert und Raumfeuchte erst bei tieferen Außentemperaturen auf.

Die bekannten Isolierglasscheiben mit dem vorgenannten zweistufig geklebter Randverbund weisen jedoch das Problem auf, dass diese Konstruktionen vergleichsweise aufwändig und massiv im Hinblick auf die auftretenden Lasten wie thermische Ausdehnung des Glases und des Abstandhalters, Eigengewicht des Glases, Verkehrslasten wie Winddruck, Sog und Bedienkräfte auszulegen sind. Diese Konstruktionen sind aufwändig und teuer in der Herstellung und weisen durch die vergleichsweise massiven Randverbunde ein zusätzliches hohes Gewicht auf, was vor allem bei grossflächigen Isolierverglasungen zusätzliche Anforderungen, beispielsweise an die Befestigung, stellt. Aus ästhetischen Gründen wären jedoch oft schlankere, filigranere Isolierglaskonstruktionen mit kleineren und unauffälligeren Randverbunden erwünscht.

Um dieses Problem zu lösen, wurden neue Verklebungslösungen entwickelt. Die WO 2014/184256 A1 beispielsweise offenbart ein deutlich verbessertes Verbundelement für Isolierglasscheiben, das besonders schubfest, zugleich leicht, stabil und kostengünstig ist. Das gelingt unter anderem mit dem Einsatz von zweikomponentigen (Meth)acrylatklebstoffen als strukturelle Klebstoffe zur Verklebung der Scheibenelemente mit den Profilelementen. Als besonders geeigneter solcher Klebstoff wird SikaFast^{®}-5211 gelehrt. Durch den Einsatz solcher Klebstoffe mit hohem Schubmodul und hoher Festigkeit kann ein besonders stabiles Verbundelement hergestellt werden, das ohne zusätzliche Mittel zur Aussteifung eingesetzt werden kann, wie z.B. üblicherweise notwendige Rahmenprofile mit grossen Rahmenquerschnitten. Damit können leichtere, schlankere und ästhetisch ansprechendere Verbundelemente, beispielsweise für grossflächige Verglasungen an Gebäuden, hergestellt werden.

Allerdings hat sich gezeigt, dass die Lösung, die in der WO 2014/184256 A1 offenbart wird, trotz der deutlichen Verbesserungen noch immer gewisse Nachteile aufweist. Zweikomponentige (Meth)acrylatklebstoffen des Standes der Technik sind zwar bezüglich Festigkeit und Steifigkeit den herkömmlichen Silikonklebstoffen deutlich überlegen und für den Einsatz in Verbundelementen sehr gut geeignet. Bei besonders niedrigen Temperaturen, zum Beispiel -20°C, werden selbst elastisch optimierte zweikomponentige (Meth)acrylatklebstoffe jedoch spröde und verlieren ihre Elastizität. Wenn unter solchen Umständen zusätzlich hohe Spannungen im Verbundelement auftreten, beispielsweise durch Winddruck oder thermischer Ausdehnung oder Kontraktion des Glases, so kann dies zu Glas- oder Klebstoffbruch führen, da der kältebedingt versprödete Klebstoff die auftretenden Spannungskräfte nicht mehr kompensieren kann.

Da sehr niedrige Temperaturen wie beispielsweise -20°C durchaus in kälteren Regionen in der Winterzeit auftreten können, bedarf es daher eines verbesserten zweikomponentigen (Meth)acrylatklebstoffs, der zur Herstellung eines Verbundelements wie in WO 2014/184256 A1 gelehrt eingesetzt werden kann und die erwähnten Nachteile überwindet.

Es ist daher die Aufgabe der vorliegenden Erfindung, ein Verbundelement, insbesondere ein Verbundelement für eine Isolierglasscheibe, eine Isolierglasscheibe, ein Profilelement, ein Fenster, eine Tür sowie ein Verfahren zur Herstellung eines Verbundelementes bzw. einer Isolierglasscheibe in vorteilhafter Weise weiterzubilden, insbesondere dahingehend, dass eine Isolierglasscheibe bereitgestellt werden kann, die besonders schubfest, aber zugleich leicht, stabil und aufgrund der Materialeinsparung kostengünstiger ist als die meisten herkömmlichen Isolierglasscheiben, und die zusätzlich im Vergleich zum Stand der Technik wie beispielsweise in WO 2014/184256 A1 gelehrt eine verbesserte Stabilität gegenüber spannungsbedingten Schäden bei sehr niedrigen Temperaturen aufweist.

### Darstellung der Erfindung

Diese Aufgabe wird erfindungsgemäß gelöst durch ein Verbundelement mit den Merkmalen des Anspruchs 1. Danach ist vorgesehen, dass ein Verbundelement wenigstens ein erstes Scheibenelement und wenigstens ein zweites Scheibenelement sowie wenigstens ein erstes Profilelement umfasst, wobei das Profilelement wenigstens eine erste Verbindefläche und/oder wenigstens eine zweite Verbindefläche aufweist, wobei die erste und/oder die zweite Verbindefläche zur Applizierung und/oder Aufnahme eines ersten Verbindemittels vorgesehen und beschaffen ist, wobei benachbart zur ersten Verbindefläche eine dritte Verbindefläche zur Applizierung und/oder Aufnahme eines zweiten Verbindemittels und/oder benachbart zu zweiten Verbindefläche eine vierte Verbindefläche zur Applizierung und/oder Aufnahme eines zweiten Verbindemittels vorgesehen ist und wobei das erste Scheibenelement und das zweite Scheibenelement mittels des Profilelementes und des ersten Verbindemittels und/oder des zweiten Verbindemittels verbindbar oder verbunden sind. Das erste Verbindemittel ist dabei ein zweikomponentiger (Meth)acrylatklebstoff wie in Anspruch 1 definiert.

Das Verbundelement kann insbesondere ein Verbundelement für eine Isolierglasscheibe sein. Das Profilelement kann beispielsweise der Abstandhalter einer Isolierglasscheibe sein.

Dadurch ergibt sich insbesondere der Vorteil, dass ein Verbundelement umfassend wenigstens ein erstes und wenigstens ein zweites Scheibenelement, das z.B. im Zusammenhang mit Isolierglasscheiben für Fenster bzw. Türen einsetzbar ist, besonders schubfest, aber zugleich leicht, stabil und aufgrund der Materialeinsparung kostengünstiger bereitgestellt werden kann, und zudem auch bei sehr tiefen Temperaturen, beispielsweise -20°C, resistent gegen Spannungsschäden ist.

Das erfindungsgemässe Verbundelement kann durch seine vorteilhaften mechanischen Eigenschaften ohne oder mit deutlich reduzierten zusätzlichen Aussteifungsmassnahmen, wie beispielsweise Metallaussteifungen im Fensterrahmen, eingesetzt werden. Dadurch sind schmalere Rahmen und grössere Scheibenelemente möglich, was den Lichteintrag durch die grössere mögliche Scheibenfläche erhöht, den bekannten Wärmeverlust über Metallaussteifungen vermindert und die Gestaltungsfreiheit bei der Herstellung der Isolierglasscheiben erweitert. Zusätzlich ist die Herstellung mit weniger Arbeitsschritten möglich, was Ressourcen schont, Kosten einspart und eine effiziente, automatisierte Herstellung vereinfacht.

Das erste und das zweite Scheibenelement können z.B. Glasscheiben, oder Kunststoffscheiben sein.

Das erste Verbindemittel ist ein zweikomponentiger (Meth)acrylatklebstoff, wobei dieser zweikomponentige (Meth)acrylatklebstoff umfasst:
- eine Komponente **K1,** umfassend
   a) mindestens ein Monomer **A** nach Formel (IIIa), 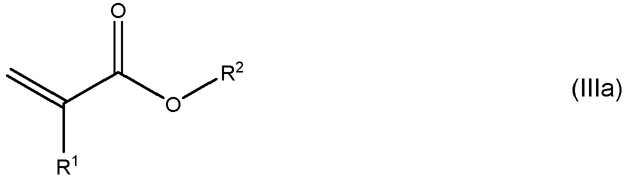
      wobei R¹ entweder für ein Wasserstoffatom oder für eine Methylgruppe, bevorzugt eine Methylgruppe, steht;
      R² entweder für eine lineare oder verzweigte Hydroxyalkylgruppe mit 2 bis 6 Kohlenstoffatomen steht oder für einen Rest mit 4 bis 8 Kohlenstoffatomen steht, der entweder eine Phenylgruppe oder einen aliphatischen 5- oder 6-Ring mit mindestens einem Ethersauerstoff in der Ringstruktur umfasst;
   b) mindestens ein Monomer **B** nach Formel (IIIb), 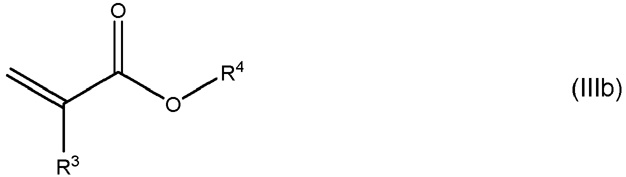
      wobei R³ entweder für ein Wasserstoffatom oder für eine Methylgruppe,
      bevorzugt eine Methylgruppe, steht;
      R⁴ für einen linearen Alkylrest mit mehr als 12 Kohlenstoffatomen in der Kette und bevorzugt höchstens 20 Kohlenstoffatomen in der Kette steht;
   c) bevorzugt zwischen 10 Gew.-% und 20 Gew.-%, bezogen auf Komponente **K1,** mindestens eines Elastomers **C** der Formel (I), 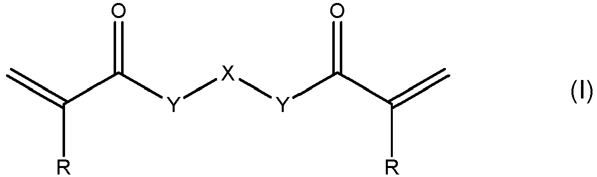
      wobei R entweder für ein Wasserstoffatom oder für eine Methylgruppe steht;
      X für ein polymeres Polyol nach Entfernung von zwei OH-Gruppen steht;
      und Y für O oder NR" steht, wobei R" für einen Kohlenwasserstoffrest oder für ein Wasserstoffatom, bevorzugt für ein Wasserstoffatom, steht; sowie
   d) bevorzugt mindestens ein Additiv ausgewählt aus der Gruppe bestehend aus Core-Shell-Polymer, Aktivator für radikalische Härtung, Inhibitor für radikalische Härtung, Füllstoff und Haftvermittler;
      mit der Massgabe, dass Komponente **K1** zwischen 25 Gew.-% und 75 Gew.-%, bevorzugt zwischen 40 Gew.-% und 60 Gew.-%, bezogen auf Komponente **K1,** des Gemischs von Monomer **A** und Monomer **B** enthält, und
      mit der Massgabe, dass das Massenverhältnis von Monomer **A** zu Monomer **B** in Komponente **K1** zwischen 1:1 und 9:1, bevorzugt zwischen 6:4 und 8:2 liegt;
- sowie eine Komponente **K2,** umfassend mindestens einen Initiator für radikalische Härtung.

Mit "Poly" beginnende Substanznamen wie beispielsweise Polyisocyanat, Polyurethan, Polyester oder Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, welche durch eine Polyreaktion (Polymerisation, Polyaddition, Polykondensation) hergestellt wurden. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heisst reaktive oligomere Voraddukte, deren funktionelle Gruppen am Aufbau von Makromolekülen beteiligt sind.

Der Begriff "polymeres Polyol" umfasst im vorliegenden Dokument ein beliebiges Polymer gemäss vorhergehender Definition, welches mehr als eine Hydroxylgruppe aufweist. Dem entsprechend umfasst der Begriff "polymeres Diol" ein beliebiges Polymer, welches genau zwei Hydroxylgruppen aufweist. Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Unter "Molekulargewicht" versteht man im vorliegenden Dokument die definierte und diskrete molare Masse (in Gramm pro Mol) eines Moleküls oder eines Teils eines Moleküls, auch als "Rest" bezeichnet. Als "mittleres Molekulargewicht" wird das Zahlenmittel Mₙ einer insbesonderen polydispersen oligomeren oder polymeren Mischung von Molekülen oder Resten bezeichnet, welches üblicherweise mittels Gelpermeationschromatographie (GPC) gegen Polystyrol als Standard bestimmt wird.

Der Begriff "(Meth)acrylat" bedeutet "Methacrylat" oder "Acrylat".

Eine gestrichelte Linie in den Formeln in diesem Dokument stellt jeweils die Bindung zwischen einem Substituenten und dem zugehörigen Molekülrest dar, sofern nicht anders spezifiziert.

Als "Raumtemperatur" wird eine Temperatur von ca. 23°C bezeichnet.

Alle im Dokument erwähnten Industrienormen oder Standards beziehen sich, sofern nichts anderes angegeben, auf die zum Zeitpunkt der Einreichung der Patentanmeldung gültige Fassung der Industrienorm oder des Standards.

Die Begriffe "Masse" und "Gewicht" werden in diesem Dokument synonym verwendet. So bezeichnet ein "Gewichtsprozent" (Gew.-%) einen prozentualen Massenanteil, der sich, falls nichts anderes erwähnt wird, auf die Masse (das Gewicht) der gesamten Zusammensetzung, bzw. je nach Zusammenhang des gesamten Moleküls, bezieht.

Der als erstes Verbindungsmittel eingesetzte zweikomponentige (Meth)acrylatklebstoff besteht aus einer ersten Komponente **K1** und einer zweiten Komponente **K2.**

Die Komponente **K1** umfasst zunächst mindestens ein Monomer **A** nach Formel (IIIa), 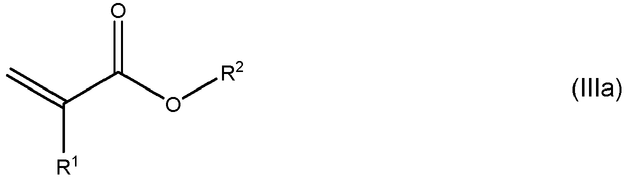 wobei R¹ entweder für ein Wasserstoffatom oder für eine Methylgruppe, bevorzugt eine Methylgruppe, steht;
R² entweder für eine lineare oder verzweigte Hydroxyalkylgruppe mit 2 bis 6 Kohlenstoffatomen steht oder für einen Rest mit 4 bis 8 Kohlenstoffatomen steht, der entweder eine Phenylgruppe oder einen aliphatischen 5- oder 6-Ring mit mindestens einem Ethersauerstoff in der Ringstruktur umfasst.

R¹ in Formel (IIIa) steht bevorzugt für eine Methylgruppe.

R² in Formel (IIIa) steht in einer bevorzugten Ausführungsform für eine lineare oder verzweigte Hydroxyalkylgruppe mit 2 bis 4 Kohlenstoffatomen. Beispiele solcher Monomere sind Hydroxypropylacrylat (HPA), Hydroxypropylmethacrylat (HPMA), Hydroxybutylacrylat (HBA) oder Hydroxybutylmethacrylat (HBMA), bevorzugt Hydroxyethylacrylat (HEA) oder Hydroxyethylmethacrylat (HEMA), wobei Hydroxyethylmethacrylat (HEMA) besonders bevorzugt ist.

R² in Formel (IIIa) steht in einer anderen bevorzugten Ausführungsform für einen Rest mit 4 bis 8 Kohlenstoffatomen, welcher einen aliphatischen 5- oder 6-Ring mit einem oder zwei Ethersauerstoffen in der Ringstruktur umfasst.

Meist bevorzugt steht R² in Formel (IIIa) für eine Hydroxyethylgruppe oder für eine Benzylgruppe oder für mindestens eine der Gruppen (IVa) bis (IVc) in Formel (IV), 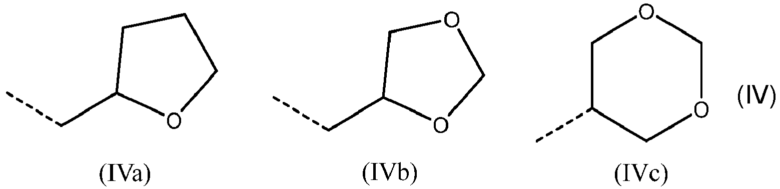 wobei die gestrichelten Linien in Formen (IV) die Bindung zwischen dem Sauerstoffatom und R² darstellen. Beispiele für solche Monomere A sind Benzylacrylat (BNA), Benzylmethacrylat (BNMA), Hydroxyethylacrylat (HEA), Hydroxyethylmethacrylat (HEMA), Tetrahydrofurfurylmethacrylat (THFMA), sowie die Isomerenmischung Glycerinformylmethacrylat («Glycerol formal methacrylate» umfassend die Strukturen (IVb) und (IVc) in Formel (IV); CAS-No. 1620329-57-8), welche unter dem Handelsnamen GLYFOMA von Evonik erhältlich ist.

Meist bevorzugte Monomere **A** sind Benzylmethacrylat (BNMA), Tetrahydrofurfurylmethacrylat (THFMA), Hydroxyethylmethacrylat (HEMA), sowie Glycerinformylmethacrylat (GLYFOMA).

Selbstverständlich können auch Mischungen dieser Monomere **A** eingesetzt werden.

Die Komponente **K1** umfasst weiterhin mindestens ein Monomer **B** nach Formel (IIIb), 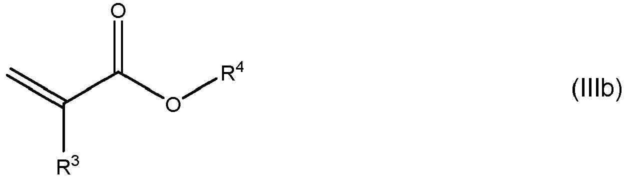
wobei R³ entweder für ein Wasserstoffatom oder für eine Methylgruppe, bevorzugt eine Methylgruppe, steht; und
R⁴ für einen linearen Alkylrest mit mehr als 12 Kohlenstoffatomen in der Kette und bevorzugt höchstens 20 Kohlenstoffatomen in der Kette steht.

R³ in Formel (IIIb) steht bevorzugt für eine Methylgruppe.

R⁴ in Formel (IIIb) steht bevorzugt für einen linearen Alkylrest mit 13 bis 18 Kohlenstoffatomen in der Kette. Falls eine Mischung aus verschiedenen Kettenlängen beim Rest R⁴ vorliegt, so gilt formell der Durchschnittswert der Kettenlängen als Mass für die effektive Kettenlänge in R⁴.
Beispiele für solche Monomere **B** sind Lauryl tetradecylacrylat (LATEA), Lauryl tetradecylmethacrylat (LATEMA), Stearylacrylat (STEA), sowie Stearylmethacrylat (STEMA). Am meisten bevorzugt sind Lauryl tetradecylmethacrylat (LATEMA) und Stearylmethacrylat (STEMA).

Komponente **K1** enthält zwischen 25 Gew.-% und 75 Gew.-%, bevorzugt zwischen 40 Gew.-% und 60 Gew.-%, bezogen auf Komponente **K1,** des Gemischs von Monomer **A** und Monomer **B.**

Dabei ist das Massenverhältnis von Monomer **A** zu Monomer **B** in Komponente **K1** zwischen 1:1 und 9:1, bevorzugt zwischen 6:4 und 8:2 einzustellen. Innerhalb dieser Grenzen ist es möglich, eine verbesserte Elastizität sowohl bei Raumtemperatur als auch bei sehr tiefen Temperaturen bis -20 °C zu erreichen.

Insbesondere enthält der zweikomponentige (Meth)acrylatklebstoff keine weiteren Monomere als die oben beschriebenen Monomere **A** und **B.** Komponente **K1** enthält weiterhin bevorzugt zwischen 10 Gew.-% und 20 Gew.-%, bezogen auf Komponente **K1,** mindestens eines Elastomers **C** der Formel (I), 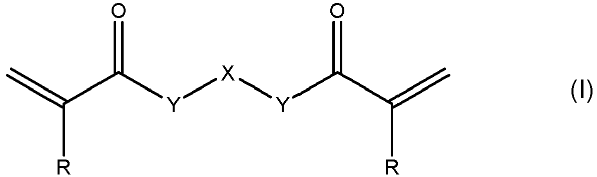
wobei R entweder für ein Wasserstoffatom oder für eine Methylgruppe steht; X für ein polymeres Polyol nach Entfernung von zwei OH-Gruppen steht;
und Y für O oder NR" steht, wobei R" für einen Kohlenwasserstoffrest oder für ein Wasserstoffatom, bevorzugt für ein Wasserstoffatom, steht.

Das Elastomer **C** der Formel (I) weist vorzugsweise ein mittleres Molekulargewicht von 1'000 bis 40'000 g/mol, insbesondere von 1'000 bis 30'000 g/mol, bevorzugt von 1'000 bis 20'000 g/mol, auf.

Im Elastomer **C** der Formel (I) steht der Rest X für ein polymeres Polyol nach Entfernung von zwei OH-Gruppen, wobei dieses polymere Polyol insbesondere ein Polyalkylenpolyol, ein Polyoxyalkylenpolyol oder ein Polyurethanpolyol; ein polyhydroxyfunktionelles Ethylen-Propylen-, Ethylen-Butylen- oder Ethylen-Propylen-Dien-Copolymer; ein polyhydroxyfunktionelles Copolymer aus Dienen wie 1,3-Butandien oder Diengemischen und Vinylmonomeren wie Styrol, Acrylnitril oder Isobutylen; ein polyhydroxyfunktionelles Polybutadienpolyol; ein polyhydroxyfunktionelles Acrylonitril/Butadien-Copolymer; oder ein Polysiloxanpolyol ist.

Polyhydroxyterminierte Acrylnitril/Butadien-Copolymere werden typischerweise aus carboxylterminierten Acrylnitril/Butadien-Copolymeren, welche beispielsweise unter dem Namen Hycar^{®} CTBN von Emerald Performance Materials, LLC, USA, kommerziell erhältlich sind, und Epoxiden oder Aminoalkoholen hergestellt.

Geeignete Elastomere **C** der Formel (I) sind beispielsweise kommerziell erhältlich von der Firma Kraton Polymers, USA, oder unter den Handelsnamen Hycar^{®} VTB und Hycar^{®} VTBNX von der Firma Emerald Performance Materials, LLC, USA.

Insbesondere ist das polymere Polyol ein polymeres Diol **PD.**

Beim Elastomer **C** der Formel (I) handelt es sich bevorzugt um ein Polyurethan(meth)acrylat. Derartige Verbindungen sind typischerweise herstellbar aus der Reaktion von mindestens einem Diol **D** mit mindestens einem Diisocyanat und einer (Meth)acrylsäure, einem (Meth)acrylamid oder einem (Meth)acrylsäureester, welcher eine Hydroxylgruppe aufweist.

In einem ersten Verfahren kann diese Umsetzung dadurch erfolgen, dass das Diol **D** und das Diisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei darauf zu achten ist, dass die NCO-Gruppen gegenüber den OH-Gruppen im stöchiometrischen Überschuss vorliegen. Das aus dieser Umsetzung resultierende Isocyanatgruppen terminierte Polyurethanpolymer wird dann mit einer (Meth)-acrylsäure, einem (Meth)acrylamid oder mit einem (Meth)acrylsäureester, welcher eine Hydroxylgruppe aufweist, insbesondere mit einem Hydroxyalkyl-(meth)acrylat wie Hydroxypropylacrylat (HPA), Hydroxypropylmethacrylat (HPMA), Hydroxybutylacrylat (HBA) oder Hydroxybutylmethacrylat (HBMA) bevorzugt mit Hydroxyethylacrylat (HEA) oder Hydroxyethylmethacrylat (HEMA), oder mit einem Monohydroxypoly(meth)acrylat eines Polyols, bevorzugt von Glycerin oder Trimethylolpropan, zu einem Polyurethan(meth)-acrylat, umgesetzt.

In einem zweiten Verfahren kann das Diol **D** mit dem Diisocyanat umgesetzt werden, wobei die OH-Gruppen gegenüber den NCO-Gruppen im stöchiometrischen Überschuss vorliegen. Das aus dieser Umsetzung resultierende Hydroxylgruppen terminierte Polyurethanpolymer kann mit einer (Meth)acrylsäure zum Elastomer **C** der Formel (I) verestert werden.

Ein weiteres Verfahren zur Herstellung des Elastomers **C** ist, in einem ersten Schritt die (Meth)acrylsäure, das (Meth)acrylamid oder den (Meth)-acrylsäureester, welcher eine Hydroxylgruppe aufweist, insbesondere Hydroxyalkyl(meth)acrylat wie Hydroxypropylacrylat (HPA), Hydroxypropylmethacrylat (HPMA), Hydroxybutylacrylat (HBA) oder Hydroxybutylmethacrylat (HBMA), bevorzugt Hydroxyethylacrylat (HEA) oder Hydroxyethylmethacrylat (HEMA), oder ein Monohydroxypoly(meth)acrylat eines Polyols, bevorzugt von Glycerin oder Trimethylolpropan, mit mindestens einem Diisocyanat umzusetzen, welches in einer Menge eingesetzt wird, dass die NCO-Gruppen gegenüber den OH-Gruppen im Überschuss vorliegen. In einer folgenden Reaktion wird das resultierende, eine Isocyanatgruppe aufweisende Zwischenprodukt mit mindestens einem Diol **D** zum Elastomer **C** der Formel (I) umgesetzt. Ebenfalls möglich ist die Herstellung des Elastomers **C** der Formel (I) durch eine Veresterung einer (Meth)acrylsäure mit einem Diol **D,** wobei das Diol in stöchiometrischem Überschuss vorliegt. In einer anschliessenden Reaktion reagiert das teilveresterte Diol **D** mit einem Diisocyanat zum Elastomer **C** der Formel (I).

Bevorzugte Diole **D** sind Polyoxyalkylendiole, auch "Polyetherdiole" genannt, Polyesterdiole, Polycarbonatdiole und deren Mischungen. Die meist bevorzugten Diole sind Polyoxyethylendiole, Polyoxypropylendiole oder Polyoxybutylendiole.

Die Polyoxyalkylendiole können unterschiedliche Ungesättigtheitsgrade (gemessen nach ASTM D-2849-69 und angegeben in Milliequivalent Ungesättigtheit pro Gramm Polyol (mEq/g)) aufweisen. Jene mit einem niedrigen Ungesättigtheitsgrad werden beispielsweise mit Hilfe von so genannten Double Metal Cyanide Komplex-Katalysatoren (DMC-Katalysatoren) hergestellt, jene mit einem höheren Ungesättigtheitsgrad werden beispielsweise mit Hilfe von anionischen Katalysatoren wie NaOH, KOH, CsOH oder Alkalialkoholaten hergestellt.

Die Verwendung von Polyoxyalkylendiolen mit tiefem Ungesättigtheitsgrad, insbesondere von weniger als 0.01 mEq/g, wird für Diole mit einem Molekulargewicht von ≥ 2000 g/mol bevorzugt.

Als Diisocyanate eignen sich grundsätzlich alle Diisocyanate. Beispielsweise sind erwähnt 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI); Oligomere und Polymere der vorgenannten Isocyanate, sowie beliebige Mischungen der vorgenannten Isocyanate. Bevorzugtes Diisocyanat ist 1-Isocyanato-3,3,5-trimethyl-5-isocyanatomethylcyclohexan (IPDI).

Am meisten bevorzugt ist Elastomer **C** ein Polyurethan(meth)acrylat, insbesondere herstellbar aus der Reaktion von mindestens einem Diol **D,** insbesondere ein Polyoxypropylen-Diol, mit mindestens einem Diisocyanat und einem (Meth)acrylsäureester, welcher eine Hydroxylgruppe aufweist, wobei
- das Diol **D** mit einem Diisocyanat, insbesondere Isophorondiisocyanat, welches in stöchiometrischen Überschuss vorliegt, reagiert;
- und das resultierende Isocyanatgruppen terminierte Polyurethan mit dem (Meth)acrylsäureester, welcher eine Hydroxylgruppe aufweist, insbesondere mit einem Hydroxyalkyl(meth)acrylat, bevorzugt mit Hydroxyethylacrylat (HEA) oder Hydroxyethylmethacrylat (HEMA) zum Elastomer **C** der Formel (I) umgesetzt wird.

Eine besonders bevorzugte Ausführungsform der Komponente **K1** enthält als Monomer **A** Tetrahydrofurfurylmethacrylat (THFMA), als Monomer **B** Lauryl tetradecylmethacrylat (LATEMA) und/oder Stearylmethacrylat (STEMA) und insbesondere keine weiteren Monomere, und als Elastomer **C** ein Polyurethan(meth)acrylat.

Eine andere besonders bevorzugte Ausführungsform der Komponente **K1** enthält als Monomer **A** Glycerinformylmethacrylat (GLYFOMA), als Monomer **B** Lauryl tetradecylmethacrylat (LATEMA) und/oder Stearylmethacrylat (STEMA) und insbesondere keine weiteren Monomere, und als Elastomer **C** ein Polyurethan(meth)acrylat.

Eine weitere besonders bevorzugte Ausführungsform der Komponente **K1** enthält als Monomer **A** Hydroxyethylmethacrylat (HEMA), als Monomer **B** Lauryl tetradecylmethacrylat (LATEMA) und/oder Stearylmethacrylat (STEMA) und insbesondere keine weiteren Monomere, und als Elastomer **C** ein Polyurethan(meth)acrylat.

Eine weitere besonders bevorzugte Ausführungsform der Komponente **K1** enthält als Monomer **A** Benzylmethacrylat (BNMA), als Monomer **B** Lauryl tetradecylmethacrylat (LATEMA) und/oder Stearylmethacrylat (STEMA) und insbesondere keine weiteren Monomere, und als Elastomer **C** ein Polyurethan(meth)acrylat.

Der Klebstoff enthält bevorzugt in Komponente **K1** zusätzlich zwischen 0.5 Gew.-% und 5 Gew.-%, bezogen auf Komponente **K1,** eines Haftvermittlers, insbesondere ein Organosilan, und/oder ein Metall(meth)acrylat oder ein (Meth)acrylat der Formel (II). 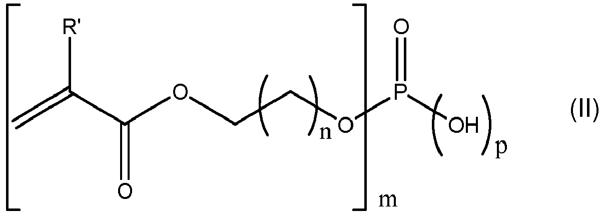 Dabei steht der Rest R' entweder für ein Wasserstoffatom oder für eine Methylgruppe. n steht für einen Wert von 1 bis 15, insbesondere von 1 bis 5, bevorzugt von 1 bis 3. m steht für einen Wert von 1 bis 3 steht und p für einen Wert von 3 minus m.

Bevorzugte Metall(meth)acrylate sind Metall(meth)acrylate von Calcium, Magnesium oder Zink, welche eine Hydroxylgruppe und/oder (Meth)acrylsäure oder (Meth)acrylat als Ligand oder Anion aufweisen. Besonders bevorzugte Metall(meth)acrylate sind Zink-(Meth)acrylat, Calcium-(Meth)acrylat, Zn(OH)(Meth)acrylat und Magnesium-(Meth)acrylat.

Bevorzugte (Meth)acrylate der Formel (II) sind 2-Methacryloyloxyethylphosphat, Bis(2-Methacryloyloxyethyl)phosphat sowie Tris(2-Methacryloyloxy-ethyl)phosphat und Mischungen davon.

Bevorzugte Organosilane sind Epoxy-funktionelle Silane, insbesondere 3-Glycidoxypropyltrimethoxysilan.

Haftvermittler dienen der Verbesserung der Adhäsion auf speziellen Substraten. Dabei ist die Verwendung von Phosphor-haltigen (Meth)acrylaten nach Formel (II) speziell für Metalloberflächen (Aluminium, eloxiertes Aluminium, usw). vorteilhaft.

Organosilane verbessern die Adhäsion auf Glas- und Keramikoberflächen. Metall(meth)acrylate sind ebenfalls vorteilhaft für die Verklebung beispielsweise auf Metalloberflächen.

Selbstverständlich können auch Mischungen aus verschiedenen Haftvermittlern eingesetzt werden.

Der Anteil des gegebenenfalls vorhandenen Haftvermittlers in Komponente **K1** beträgt vorzugsweise zwischen 1 und 3 Gew.-%, bezogen auf Komponente **K1**

Weiterhin kann der Klebstoff in Komponente **K1** bevorzugt zusätzlich mindestens ein Core-Shell Polymer enthalten. Core-Shell Polymere bestehen aus einem elastischen Kernpolymer (Core) und einem starren Schalen-Polymer (Shell). Insbesondere geeignete Core-Shell Polymere bestehen aus einer starren Schale eines starren thermoplastischen Polymers, welcher auf einem Kern aus vernetztem elastischem Acrylat- oder Butadien-Polymer aufgepfropft ist.

Besonders geeignete Core-Shell-Polymere sind diejenigen, welche im Monomer **A** und/oder im Co-Monomer **B** aufquellen, sich aber darin nicht lösen.

Bevorzugte Core-Shell-Polymere sind so genannte MBS Polymere, welche beispielsweise kommerziell unter dem Handelsnamen Clearstrength^{®} von Arkema Inc., USA, oder Paraloid^{®} von Rohm and Haas, USA, erhältlich sind. Die Core-Shell Polymere werden bevorzugt in einer Menge von 0.01 bis 30 Gew.-%, insbesondere von 5 bis 20 Gew.-%, bezogen auf Komponente **K1,** eingesetzt.

Weiterhin kann der zweikomponentige Klebstoff in Komponente **K1** zusätzlich bevorzugt mindestens einen Aktivator für radikalische Härtung, auch als Katalysator bezeichnet, enthalten. Beim Aktivator handelt es sich insbesondere um ein tertiäres Amin, ein Übergangsmetallsalz oder ein Übergangsmetallkomplex. Beispielsweise sind solche geeigneten tertären Amine N,N-Dimethylanilin, N,N-Diethylanilin, N,N-Dimethyl-*p*-toluidin, N,N-Diethyl-*p*-toluidin, N-Methyl-N-hydroxyethyl-*p*-toluidin, N,N-*bis*(2-hydroxyethyl)-*p*-toluidin sowie alkoxylierte N,N-*bis*(hydroxyethyl)-p-toluidine, N-ethoxyliertes *p*-Toluidin, N-Alkylmorpholin und Mischungen davon. Übergangmetallsalze und Übergangsmetallkomplexe sind beispielsweise Salze und Komplexe von Cobalt, Nickel, Kupfer, Mangan oder Vanadium. Es können auch Mischungen solcher Stoffe als Aktivator eingesetzt werden. Am meisten bevorzugt als Aktivator ist N,N-Bis-(2-Hydroxyethyl)-para-Toluidin.

Der Aktivator wird bevorzugt in einer Menge von 0.01 bis 2.5 Gew.-%, insbesondere von 0.5 bis 2.5 Gew.-%, bezogen auf Komponente **K1,** eingesetzt.

Bevorzugt enthält der zweikomponentige Klebstoff in Komponente **K1** zusätzlich einen Inhibitor für radikalische Härtung. Dabei handelt es sich um Substanzen, welche die radikalischen Mechanismen der Aushärtung etwas verlangsamen oder moderieren oder unerwünschte Aushärtungsreaktionen (beispielsweise UV-Licht- oder Luftsauerstoff-induzierte Mechanismen) inhibiert, was zu einer verbesserten Lagerstabilität und/oder einer kontrollierteren, gleichmässigeren Aushärtung führt.

Bevorzugt enthält die Komponente **K1** zwischen 0.001 Gew.-% und 0.5 Gew.-%, bezogen auf Komponente **K1,** mindestens eines Inhibitors für radikalische Härtung, insbesondere ein alkyliertes Phenol, bevorzugt 2,6-Di-tert.butyl-p-Kresol.

Weiterhin kann Komponente **K1** bevorzugt zusätzlich mindestens einen Füllstoff enthalten. Insbesondere geeignet sind dabei natürliche, gemahlene oder gefällte Calciumcarbonate (Kreiden), welche gegebenenfalls mit Fettsäuren, insbesondere Stearaten, beschichtet sind, Montmorillonite, Bentonite, Bariumsulfat (BaSO₄, auch Baryt oder Schwerspat genannt), calcinierte Kaoline, Quarzmehl, Aluminiumoxide, Aluminiumhydroxide, Kieselsäuren, insbesondere pyrogene Kieselsäuren, modifizierte Rizinusölderivate und Polymerpulver oder Polymerfasern. Bevorzugt sind Calciumcarbonate, meist bevorzugt sind beschichtete Calciumcarbonate.

Der Füllstoff wird üblicherweise in einer Menge von 0.01 bis 35 Gew.-%, insbesondere von 5 bis 30 Gew.-%, bevorzugt 15 bis 25 Gew.-%, bezogen auf Komponente **K1,** eingesetzt.

Die zweite Komponente **K2** des zweikomponentigen (Meth)acrylatklebstoffs umfasst mindestens einen Initiator für radikalische Härtung. Beim Initiator handelt es sich um einen Radikalbildner, der reaktive Radikale bildet, welche den radikalischen Aushärtemechanismus der Monomere in Komponente **K1** auslöst.

Als solche Radikalbildner sind insbesondere Moleküle geeignet, welche unter Einfluss von Wärme oder von elektromagnetischer Strahlung Radikale bilden, die dann zur Polymerisation der Zusammensetzung führen.

Als Radikalbildner gelten insbesondere thermisch aktivierbare Radikalbildner und Photoinitiatoren.

Als thermisch aktivierbare Radikalbildner sind insbesondere solche bevorzugt, welche bei Raumtemperatur noch genügend stabil sind, bei leicht erhöhter Temperatur aber bereits Radikale bilden. Insbesondere ist ein solcher Radikalbildner ein Peroxid, ein Perester oder ein Hydroperoxid. Bevorzugt werden organische Peroxide. Meist bevorzugt ist Dibenzoylperoxid.

Als Photoinitiator werden Radikalbildner bezeichnet, welche unter dem Einfluss von elektromagnetischer Strahlung Radikale bilden. Insbesondere geeignet ist ein Photoinitiator, welcher bei einer Bestrahlung mit einer elektromagnetischen Strahlung der Wellenlänge von 230 nm bis 400 nm Radikale bildet und bei Raumtemperatur flüssig ist.

Besonders bevorzugt ist der Photoinitiator ausgewählt aus der Gruppe bestehend aus α-Hydroxyketonen, Phenylglyoxylaten, Monoacylphosphinen, Diacylphosphinen, Phosphinoxiden und Mischungen davon, insbesondere 1-Hydroxy-cyclohexyl-phenyl-keton, Benzophenon, 2-Hydroxy-2-methyl-1-phenyl-propanon, Methyl-Phenyl-Glycoxylat, Oxy-phenyl-essigsäure 2-[2-oxo-2-phenyl-acetoxy-ethoxy]ethylester, Oxy-phenyl-essigsäure 2-[2-hydoxy-ethoxy]-ethyl ester, Diphenyl(2,4,6-trimethylbenzoyl)phosphinoxid, Phenylbis(2,4,6-trimethylbenzoyl)phosphinoxid und Mischungen davon. Derartige Photoinitiatoren sind beispielsweise kommerziell erhältlich aus der Produktlinie IRGACURE^{®} und DAROCUR^{®} von Ciba Speciality Chemicals, Schweiz.

Es können auch Mischungen von Photoinitiatoren verwendet werden.

Komponente **K2** des zweikomponentigen Klebstoffs enthält bevorzugt zwischen 5 Gew.-% und 75 Gew.-%, bezogen auf Komponente **K2,** des mindestens einen Initiators für radikalische Härtung, wobei es sich dabei insbesondere um einen thermisch aktivierbaren Radikalbildner, bevorzugt ein Peroxid, ein Hydroperoxid oder einen Perester, meist bevorzugt Dibenzoylperoxid, handelt,
oder wobei es sich dabei um einen Photoinitiator, insbesondere einen Photoinitiator, welcher bei einer Bestrahlung mit einer elektromagnetischen Strahlung der Wellenlänge von 230 nm bis 400 nm Radikale bildet, handelt.

Am meisten bevorzugt als Initiator in Komponente **K2** ist Dibenzoylperoxid. Bevorzugt wird dieses in einem Weichmacher dispergiert eingesetzt.

Komponente **K2** des zweikomponentigen (Meth)acrylatklebstoffs enthält bevorzugt zusätzlich mindestens ein Additiv ausgewählt aus der Gruppe bestehend aus Weichmacher, Füllstoff, Thixotopieadditiv und Farbstoff, insbesondere alle diese Additive.

Als Weichmacher sind alle nichtreaktiven, bei Raumtemperatur flüssigen Substanzen geeignet, welche üblicherweise in (Meth)acrylatzusammensetzungen in dieser Funktion eingesetzt werden.

Als Füllstoffe sind beispielsweise dieselben Füllstoffe wie für Komponente **K1** beschrieben geeignet.

Als Farbstoffe sind nichtreaktive organische Farbstoffe und Pigmente geeignet. Als Thixotropieadditive sind alle üblicherweise in

(Meth)acrylatzusammensetzungen verwendeten solche Additive geeignet.

Der beschriebene Klebstoff kann in einer oder beiden Komponenten gegebenenfalls zusätzlich noch weitere Bestandteile enthalten. Derartige zusätzliche Bestandteile sind Zähigkeitsmodifikatoren, Farbstoffe, Pigmente, Inhibitoren, UV- und Hitzestabilisatoren, Metalloxide, Antistatika, Flammschutzmittel, Biozide, Weichmacher, Wachse, Verlaufsmittel, Haftvermittler, Thixotropiermittel, Abstandhalter und weitere dem Fachmann bekannte gängige Rohstoffe und Additive.

Beim ersten Verbindungsmittel handelt es sich um eine zweikomponentige (Meth)acrylatzusammensetzung, wobei deren zwei Komponenten **K1** und **K2** bis zur Applikation getrennt voneinander aufbewahrt werden. Dabei beinhaltet die erste Komponente **K1** insbesondere jene Inhaltsstoffe der beschriebenen Zusammensetzung, welche radikalisch polymerisierbare Gruppen aufweisen. Die zweite Komponente **K2** beinhaltet insbesondere die Radikalbildner, auch Initiatoren genannt. Weiterhin können in einer zweikomponentigen Zusammensetzung auch andere Bestandteile, insbesondere solche, welche durch Reaktion untereinander die Lagerstabilität der Zusammensetzung beeinträchtigen, getrennt aufbewahrt werden.

Üblicherweise weisen in solchen zweikomponentigen (Meth)acrylatklebstoffen die Komponente **K1** die Bestandteile Monomere, Elastomere, Core-Shell Polymere, Katalysatoren, Haftverbesserer, Pigmente und Füllstoffe und die Komponente **K2** die Bestandteile Radikalstarter, Pigmente und Füllstoffe auf. Das Mischverhältnis von **K1** zu **K2** liegt insbesondere im Bereich von 1:1 bis 10:1.

Der als erstes Verbindungsmittel eingesetzte eben beschriebene zweikomponentige (Meth)acrylatklebstoff besitzt bei über einen sehr breiten Temperaturbereich, welcher den Einsatzbereich von Isolierglasscheiben abdeckt, eine hohe Festigkeit und Steifigkeit und eine genügend hohe Elastizität. Er weist bei Raumtemperatur eine hohe Elastizität und gleichzeitig eine ausreichend hohe Festigkeit und Steifigkeit auf, um das Verbundelement ohne zusätzliche Aussteifungen gegenüber zum Beispiel Spannungen und Windlasten zu stabilisieren. Zusätzlich ist er aber auch bei sehr tiefen Temperaturen, zum Beispiel bis zu -20 °C, noch ausreichend elastisch und kann herkömmliche (Meth)acrylatklebstoffe diesbezüglich übertreffen. Zusätzlich kann der zweikomponentige (Meth)acrylatklebstoff ohne leichtflüchtige, stark unangenehm riechende Monomere wie Methylmethacrylat (MMA) formuliert werden. Die nach DIN EN 53504 gemessenen Bruchdehnungen des erfindungsgemäss verwendeten zweikomponentigen (Meth)acrylatklebstoffs liegen bei Raumtemperatur (23°C) bei mindestens 100%, bevorzugt mindestens 150%, insbesondere mindestens 200% oder höher. Gleichzeitig weisen der erfindungsgemäss verwendete zweikomponentigen (Meth)acrylatklebstoff bei einer Temperatur von -20°C Bruchdehnungen von mindestens 20%, bevorzugt mindestens 25%, insbesondere mindestens 30% oder höher auf, was gegenüber typischen zweikomponentigen (Meth)acrylatklebstoffen des Standes der Technik eine deutliche Verbesserung darstellt.

Das zweite Verbindemittel ist oder umfasst bevorzugt zumindest teilweise Polyisobutylen (PIB).

In einigen Ausführungsformen kann das zweite Verbindungsmittel auch teilweise oder ganz aus demselben Material wie das erste Verbindungsmittel bestehen, also aus einem zweikomponentigen (Meth)acrylatklebstoff wie eben beschrieben. Dieser kann identisch zum Klebstoff des ersten Verbindungsmittels sein oder er kann eine unterschiedliche Ausführungsform des beschriebenen zweikomponentigen (Meth)acrylatklebstoffs des ersten Verbindungsmittels sein.

Bei einer erfindungsgemässen Verbundelement mit einem erfindungsgemäss ausgestalteten zweikomponentigen (Meth)acrylatklebstoff als erstes Verbindemittel ergibt sich unter Anderem der Vorteil, dass eine besonders schubfeste Struktur erreicht werden kann. Durch die Verwendung eines solchen Klebstoffs als erstes Verbindemittel kann eine deutlich höhere Steifigkeit des Verbundelementes bei gleichzeitig geringerem Materialeinsatz erreicht werden verglichen mit herkömmlichen Klebstoffen wie beispielsweise Silikonen. Zusätzlich weist das Verbindungsmittel auch eine gegenüber (Meth)acrylatklebstoffen des Standes der Technik verbesserte Tieftemperaturstabilität auf.

Allgemein gilt, je steifer der Klebstoff desto schubfester wird der Verbund aber auch die Spannungen im Glass und Verklebung. Hohe Spannungen können zu Glas- und Klebstoffbruch führen. Spannungen können dabei durch den Unterschied in der thermischen Ausdehnung des Glases und des Abstandhalters, des Eigengewichtes des Glases, durch Verkehrslasten wie Winddruck, Sog und Bedienkräfte entstehen.

Wichtig ist es daher insbesondere, die Steifigkeit des Klebstoffes so zu wählen, dass bei optimalem Verbund noch vertretbare Spannungen in Glas und Klebstoff übertragen werden. Der erfindungsgemäss zusammengesetzte und verwendete zweikomponentige (Meth)acrylatklebstoff weist besonders vorteilhafte Eigenschaften diesbezüglich auf, da er auch bei sehr tiefen Temperaturen die nötige Steifigkeit, aber auch eine genügende Elastizität aufweist, um die Spannungskräfte aufnehmen und übertragen zu können. Gleichzeitig besitzt er die weiteren mechanischen Eigenschaften, die für den Einsatz als erstes Verbindungsmittel im Rahmen dieser Erfindung benötigt.

Wichtige technische Werte sind daher beispielsweise das Schubmodul des Klebstoffes, das auch temperaturabhängig ist, sowie Zugfestigkeit und Adhäsionskraft. Ferner sind auch der Ausdehnungskoeffizient zwischen Glas und Abstandshalter, Temperaturunterschiede zwischen Scheibenherstellung und Nutzung, Windlasten in Abhängigkeit der Glasflächen, Eigengewichte in Abhängigkeit von Glasstärken und Glasflächen, Spannungen durch Einbau und Nutzung zu beachten. Durch diese Art einer strukturellen Glasverklebung kann beispielsweise eine besonders schonende Verglasung erreicht werden und es ist möglich, das Risiko von Glasbruch zu reduzieren.

Darüber hinaus ist denkbar, dass die erste und/oder die zweite Verbindefläche zumindest teilweise als Vertiefung ausgebildet ist, insbesondere als eine Vertiefung ausgebildet ist, die derart beschaffen ist, dass sie gegenüber der dritten und/oder vierten Verbindefläche zurückgesetzt ist, insbesondere bezogen auf die Auflagefläche auf dem ersten bzw. zweiten Scheibenelement zurückgesetzt ist.

Die Vertiefung kann beispielsweise eine Fuge oder eine stufenartige Vertiefung sein. Je geringer die Fugenhöhe, desto schubfester wird der Verbund. Jedoch gilt, mit Abnahme der Fugenhöhe nimmt die Spannung im Klebstoff und Glas zu. Die Berechnung ist deshalb nicht linear. Besonders kritisch können die Eckbereiche sein, weil dort die höchsten Spannungen auftreten können. Gleichzeitig hat für den schubfesten Verbund die Fugenbreite eine vergleichsweise untergeordnete Rolle. Mit der Dimensionierung der Fugenbreite kann die Spannung im Klebstoff und Glas gesteuert werden. Hier gilt, je grösser die Fläche (resultierend aus Fugenbreite und Umfang) desto geringer ist die Spannung in der Klebstofffuge und zwischen Klebstoff und Glas.

Mehr Steifigkeit des Verbundelementes ist insbesondere dann von Vorteil, wenn z.B. bei der Verwendung des Verbundelementes als Isolierglasscheibe eine Durchbiegung bzw. Durchbiegungen in Folge von Windlasten auftreten können. Dies kann beispielsweise bei zweigeteilten Fenstern im Teilungsbereich auftreten oder bei Fassaden im nichtgehaltenen Bereich. Hier kann es beispielsweise notwendig sein, den Mittelbereich statisch zu hinterbauen, was bislang gemäß Stand der Technik durch größere Rahmenquerschnitte oder zusätzliche Aussteifungen im Rahmenprofil erfolgt. Die Bemessungsgrundlage für die Durchbiegung muss der Bedingung <I/200 genügen, wobei I die Länge der Glaskante ist. Mit schubfest verbundenem Glas gemäß einer erfindungsgemäßen Konstruktion mit einem Verbundelement bzw. einer vorteilhaften Ausführungsform hierzu kann ganz oder teilweise auf die bislang notwendigen zusätzlichen Aussteifungen verzichtet und/oder Rahmenquerschnitte verringert werden oder bei gleichen Rahmenquerschnitten und Aussteifungen grösser hergestellt werden. Dies führt zu teilweise erheblichen Materialeinsparungen und ist zugleich auch optisch attraktiv.

Zu beachten ist, dass je grösser der Scheibenzwischenraum ist, desto steifer wird das Glas. Die Berechnung ist dabei nicht linear, der Abstand geht in dritter Potenz in die Berechnung ein.

Des Weiteren kann vorgesehen sein, dass das Profilelement einen bezogen auf den Querschnitt kastenartigen Grundkörper aufweist. Der Grundkörper kann seine bezogen auf den Querschnitt kastenartige Form z.B. dadurch ausbilden, dass der Grundkörper einen im Wesentlichen rechteckigen oder quadratischen Querschnitt aufweist. Außerdem ist denkbar, dass der Grundkörper im Inneren zumindest teilweise hohl ist bzw. einen Hohlraum aufweist und/oder ausbildet, wobei beispielsweise der Hohlraum zumindest teilweise durchlässig und/oder perforiert ist und wobei weiter beispielsweise der der Hohlraum zumindest teilweise mit einem hygroskopischen Material ausgefüllt ist. Weiterhin kann der Hohlraum, mindestens an der zum Glaszwischenraum entgegengesetzten Seite, mit einer Metallfolie beschichtet oder die Metallfolie in der Matrix integriert werden, was die Wasser- und Gasdiffusionsdichtheit erhöht und somit die Gebrauchstauglichkeit des Mehrscheiben-Isolierglases (MIG) verlängert.

Außerdem ist möglich, dass an dem Grundkörper ein erster Steg und/oder ein zweiter Steg angeformt ist, wobei zumindest eine Seitenwand des ersten Steges zumindest teilweise die erste Verbindefläche ausbildet und/oder wobei zumindest eine Seitenwand des zweiten Steges zumindest teilweise die erste Verbindefläche ausbildet.

Ferner kann vorgesehen sein, dass das erste Scheibenelement und das zweite Scheibenelement zumindest teilweise aus Glas und das Profilelement zumindest teilweise aus glasfaserverstärktem Werkstoff, insbesondere zumindest teilweise aus Glasfaserverbundwerkstoff, vorzugsweise zumindest teilweise aus glasfaserverstärktem Kunststoff besteht. Dadurch ergibt sich der Vorteil, dass sowohl die Scheibenelemente als auch das Profilelement einen im wesentlichen gleichen Wärmeausdehnungskoeffizient aufweisen. Dies wiederum geht mit dem Vorteil einher, dass Spannungen in Folge von Wärme minimiert werden können.

Des Weiteren betrifft die vorliegende Erfindung eine Isolierglasscheibe mit den Merkmalen des Anspruchs 10. Danach ist vorgesehen, dass eine Isolierglasscheibe mit wenigstens einem Verbundelement nach einem der Ansprüche 1 bis 9 versehen ist.

Außerdem betrifft die vorliegende Erfindung ein Profilelement mit den Merkmalen des Anspruchs 11. Danach ist vorgesehen, dass ein Profilelement mit den Profilelementmerkmalen nach einem der Ansprüche 1 bis 9 ausgebildet wird bzw. ist.

Darüber hinaus betrifft die vorliegende Erfindung ein Fenster mit den Merkmalen des Anspruchs 12. Danach ist vorgesehen, dass ein Fenster mit wenigstens einem Verbundelement nach einem der Ansprüche 1 bis 9 und/oder mit wenigstens einer Isolierglasscheibe nach Anspruch 10 und/oder mit wenigstens einem Profilelement nach Anspruch 11 versehen ist.

Außerdem betrifft die vorliegende Erfindung eine Tür mit den Merkmalen des Anspruchs 13. Danach ist vorgesehen, dass eine Tür mit wenigstens einem Verbundelement nach einem der Ansprüche 1 bis 9 und/oder mit wenigstens einer Isolierglasscheibe nach Anspruch 10 und/oder mit wenigstens einem Profilelement nach Anspruch 11 versehen ist.

Des Weiteren betrifft die vorliegende Erfindung ein Verfahren zur Herstellung eines Verbundelementes mit den Merkmalen des Anspruchs 14. Danach ist vorgesehen, dass zur Herstellung eines Verbundelementes, insbesondere eines Verbundelementes für eine Isolierglasscheibe, wenigstens ein erstes Scheibenelement und wenigstens ein zweites Scheibenelement sowie wenigstens ein erstes Profilelement durch Klebung zusammengefügt werden, wobei das Profilelement wenigstens eine erste Verbindefläche und/oder wenigstens eine zweite Verbindefläche aufweist, wobei die erste und/oder die zweite Verbindefläche zur Applizierung und/oder Aufnahme eines ersten Verbindemittels vorgesehen und beschaffen ist, wobei benachbart zur ersten Verbindefläche eine dritte Verbindefläche zur Applizierung und/oder Aufnahme eines zweiten Verbindemittels und/oder benachbart zu zweiten Verbindefläche eine vierte Verbindefläche zur Applizierung und/oder Aufnahme eines zweiten Verbindemittels vorgesehen ist und wobei das erste Scheibenelement und das zweite Scheibenelement mittels des Profilelementes und des ersten Verbindemittels und gegebenenfalls des zweiten Verbindemittels verbunden werden, wobei das Verbundelement die Merkmale nach einem der Ansprüche 1 bis 9 aufweist.

Außerdem betrifft die vorliegende Erfindung ein Verfahren zur Herstellung eines einer Isolierglasscheibe mit den Merkmalen des Anspruchs 15. Danach ist vorgesehen, dass zur Herstellung eines einer Isolierglasscheibe wobei wenigstens ein Verbundelement nach einem der Ansprüche 1 bis 9 oder ein Verbundelement erhalten durch das Verfahren nach Anspruch 14 verwendet wird.

### Kurze Beschreibung der Zeichnung

Im Folgenden werden anhand der Zeichnungen Ausführungsbeispiele der Erfindung näher erläutert.

Sie zeigen:
- Fig. 1: eine schematische Darstellung eines Teiles eines erfindungsgemäßen Isolierglases im Querschnitt.
- Fig. 2: eine schematische Darstellung eines Teiles eines weiteren erfindungsgemäßen Isolierglases im Querschnitt.

Es sind nur die für das unmittelbare Verständnis der Erfindung wesentlichen Elemente gezeigt.

### Weg zur Ausführung der Erfindung

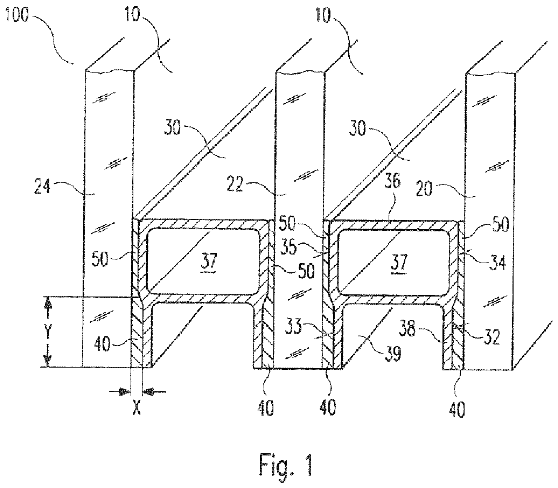

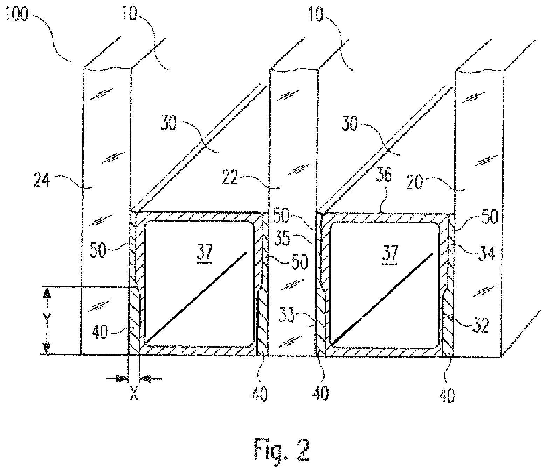

Figur 1 und Figur 2 zeigen zwei Ausführungsformen einer Isolierglasscheibe 100 mit wenigstens einem Verbundelement 10, das durch die Scheibenelemente 20 und 22 und das Profilelement 30 ausgebildet ist.

Die Isolierglasscheibe 100 weist in den in Figur 1 und Figur 2 gezeigten Ausführungsformen ein drittes Scheibenelement 24 und ein weiteres Profilelement 30 auf, welches das dritte Scheibenelement 24 mit dem Scheibenelement 22 verbindet. Die beiden Profilelemente 30 sind in diesen Ausführungsbeispielen innerhalb des jeweiligen Ausführungsbeispiels jeweils baugleich, unterscheiden sich aber zwischen den beiden Ausführungsbeispielen. Das Ausführungsbeispiel in Figur 1 weist neben einem im Querschnitt kastenartigen Grundkörper 36 einen ersten Steg 38 und einen zweiten Steg 39 auf, welche weiter unten weiter beschrieben werden. Das Ausführungsbeispiel in Figur 2 weist lediglich einen im Querschnitt kastenartigen Grundkörper 36 auf. Die Ausführungsform in Figur 1 kann auch so beschaffen sein, dass der erste Steg 38 und der zweite Steg 39 oberhalb des Grundkörpers 36 angebracht sind.

Denkbar ist in allen Ausführungsformen, dass der Zwischenraum zwischen den Scheibenelementen 20, 22, 24 mit einem Gas gefüllt ist. Ein derartiges Gas kann beispielsweise Argon sein.

Das zweite und das dritte Scheibenelement 22, 24 bilden gemeinsam mit dem weiteren, dazwischen befindlichen Profilelement ein weiteres Verbundelement 10' aus, das im Wesentlichen identisch zum ersten Verbundelement 10 ist und das nun nachstehend im Detail beschrieben wird:
Das Verbundelement umfasst das erstes Scheibenelement 20 und ein zweites Scheibenelement 22 sowie das erstes Profilelement 30 bzw. Abstandhalter 30. Das Profilelement 30 weist eine erste Verbindefläche 32 und eine zweite Verbindefläche 33 auf, wobei die erste und die zweite Verbindefläche 32, 33 zur Applizierung und Aufnahme eines ersten Verbindemittels 40 vorgesehen und beschaffen sind.

Das erste Verbindemittel 40 ist in allen Ausführungsformen ein zweikomponentiger (Meth)acrylatklebstoff wie in Anspruch 1 definiert, beispielsweise Zusammensetzung E1 wie weiter unten beschrieben. Berechnungen und Versuche mit den in den Figuren 1 und 2 gezeigten Ausführungsbeispielen und mit den weiter unten beschriebenen erfindungsgemässen Ausführungsbeispielen des zweikomponentigen Klebstoffs haben gezeigt, dass eine ca. 10-fach höhere Steifigkeit erzielbar ist im Vergleich zu herkömmlichen Konstruktionen ohne (Meth)acrylatklebstoffe. Gleichzeitig wird auch eine deutlich höhere Tieftemperaturelastizität und damit Spannungsbruchresistenz der Verklebung erreicht als bei Konstruktionen das Standes der Technik, welche auf herkömmlichen (Meth)acrylatklebstoffen basieren.

Die erste und die zweite Verbindefläche 32, 33 sind als Vertiefung ausgebildet, die derart beschaffen ist, dass sie gegenüber der dritten und/oder vierten Verbindefläche 34, 35 bezogen auf die Auflagefläche auf dem ersten bzw. zweiten Scheibenelement 20, 22 zurückgesetzt ist.

Die Vertiefung ist hier eine Fuge bzw. eine stufenartige Vertiefung. Je geringer die Fugenhöhe x, desto schubfester wird der Verbund. Jedoch gilt, mit Abnahme der Fugenhöhe x nimmt die Spannung im Klebstoff und Glas zu. Die Berechnung ist deshalb nicht linear. Besonders kritisch können die Eckbereiche sein, weil dort die höchsten Spannungen auftreten können. Gleichzeitig hat für den schubfesten Verbund die Fugenbreite y eine vergleichsweise untergeordnete Rolle. Mit der Dimensionierung der Fugenbreite y kann die Spannung im Klebstoff und Glas gesteuert werden. Hier gilt, je grösser die Fläche (resultierend aus Fugenbreite und Umfang) desto geringer ist die Spannung in der Klebstofffuge und zwischen Klebstoff 40 und dem Glas der Scheibenelement 20, 22.

Benachbart zur ersten Verbindefläche 32 ist eine dritte Verbindefläche 34 zur Applizierung und/oder Aufnahme eines zweiten Verbindemittels 50 und benachbart zu zweiten Verbindefläche 33 eine vierte Verbindefläche 35 zur Applizierung und/oder Aufnahme eines zweiten Verbindemittels 50 vorgesehen.

Das erste Scheibenelement 20 und das zweite Scheibenelement 22 sind in beiden gezeigten Ausführungsbeispielen mittels des Profilelementes 30 und des ersten Verbindemittels 40 und des zweiten Verbindemittels 50, hier Polyisobutylen (PIB), verbunden.

Das Profilelement 30 weist in beiden Ausführungsbeispielen in Figur 1 und Figur 2 einen bezogen auf den Querschnitt kastenartigen Grundkörper 36 auf. Dabei ist der Grundkörper 36 im Inneren zumindest teilweise hohl und weist einen Hohlraum 37 auf. Der Hohlraum 37 ist zumindest teilweise durchlässig und perforiert und mit einem hygroskopischen Material ausgefüllt. Hierdurch kann Feuchtigkeit absorbiert werden.

An dem Grundkörper 36 im Ausführungsbeispiel gemäß Figur 1 ist ein erster Steg 38 und ein zweiter Steg 39 angeformt, wobei eine Seitenwand des ersten Steges 38 zumindest teilweise die erste Verbindefläche 32 ausbildet und wobei eine Seitenwand des zweiten Steges 39 zumindest teilweise die zweite Verbindefläche 33 ausbildet. Es sind jedoch auch Ausführungsformen möglich, bei denen der erste Steg 38 und der zweite Steg 39 oberhalb des Grundkörpers 36 angebracht sind.

Weiterhin ist es möglich, dass bei Ausführungsformen mit einem ersten Steg 38 und einem zweiten Steg 39 die Stege mindestens teilweise so beschaffen sind, dass sie eine gewisse Beweglichkeit aufweisen und auf diese Weise Spannungskräfte, ausgleichen können, die beispielsweise bei hohen Druckunterschieden zwischen dem Gas im Zwischenraum zwischen den Scheibenelementen 20, 22, 24 und dem Luftdruck auftreten können. Damit kann eine zusätzliche Stabilität des erreicht werden. Eine solche Beweglichkeit kann beispielsweise erreicht werden, indem im jeweiligen Steg an mindestens einer Stelle eine dünnere Wandstärke vorliegt, die eine kontrollierte, reversible Biegefähigkeit erlaubt. Auch möglich ist es, den jeweiligen Steg teilweise aus einem weicheren, elastischeren Material zu fertigen, so dass im Bereich dieses Materials eine Biegefähigkeit erreicht wird.

Das erste Scheibenelement 20 und das zweite Scheibenelement 22 (und auch das dritte Scheibenelement 24) sind in beiden gezeigten

Ausführungsbeispielen in Figur 1 und Figur 2 jeweils zumindest teilweise aus Glas und das Profilelement 30 besteht auch aus glasfaserverstärktem Kunststoff.

### Bezugszeichenliste

- 10: Verbundelement
- 10': Verbundelement
- 20: erstes Scheibenelement
- 22: zweites Scheibenelement
- 24: drittes Scheibenelement
- 30: Profilelement
- 32: erste Verbindefläche
- 33: zweite Verbindefläche
- 34: dritte Verbindefläche
- 35: vierte Verbindefläche
- 36: Grundkörper
- 37: Hohlraum
- 38: erster Steg
- 39: zweiter Steg
- 40: erstes Verbindemittel
- 50: zweites Verbindemittel
- 100: Isolierglasscheibe
- x: Fugenhöhe
- y: Fugenbreite

### Ausführungsbeispiele zum ersten Verbindemittel

Im Folgenden werden Ausführungsbeispiele des zweikomponentigen (Meth)acrylatklebstoffs für das erste Verbindemittel beschrieben, welche dessen Herstellung offenbaren und die wesentlichen Eigenschaften zeigen.

### Verwendete Monomere

**Tabelle 1: Verwendete Monomere.**

| **Abkürzung** | **Struktur** | **Name/Handelsname** |
|---|---|---|
| GLYFOMA ¹ | 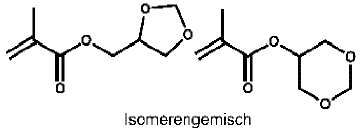 | VISIOMER^{®} GLYFOMA (Evonik) |
| MMA | 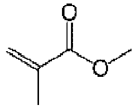 | Methylmethacrylat |
| BNMA ¹ | 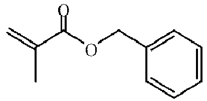 | Benzylmethacrylat |
| THFMA ¹ | 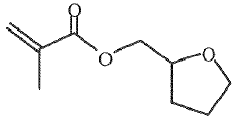 | Tetrahydrofurfurylmethacrylat |
| IBOMA | 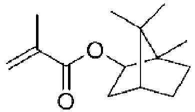 | Isobornylmethacrylat |
| LATEMA ² | 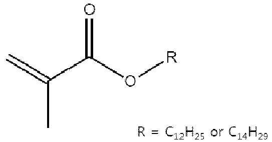 | Lauryl tetradecyl methacrylate (Houchi Chemicals) |
| M131 | 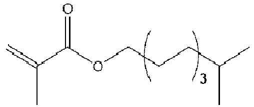 | MIRAMER^{®} M131 (Miwon); Isodecylmethacrylat |
| M193 | 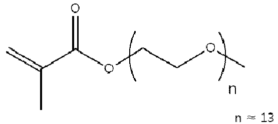 | MIRAMER^{®} M193 (Miwon); Methoxy PEG600 Methacrylat |
| M1053 | 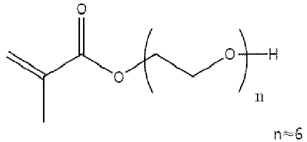 | MIRAMER^{®} M1053 (Miwon); |
| LAMA | 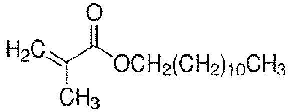 | Laurylmethacrylat |
| STEMA² | 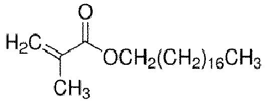 | Stearylmethacrylat |
| HEMA¹ | 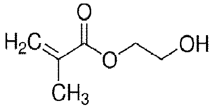 | Hydroxyethylmethacrylat |

| | | |
|---|---|---|
| ¹ Monomer **A** gemäss vorliegender Erfindung. ² Monomer **B** gemäss vorliegender Erfindung. | | |

### Herstellung eines Elastomers C

Das Elastomer **C1** wurde wie folgt hergestellt:
849 g Polyoxypropylen-Diol (Acclaim^{®} 4200 N, Bayer MaterialScience; OH-Zahl 28.5 KOH/g) und 101 g 1-Isocyanato-3,3,5-trimethyl-5-isocyanatomethylcyclohexan (= Isophorondiisocyanat oder IPDI; Desmodur^{®} I, Bayer MaterialScience) wurden bei 60 °C zu einem Isocyanatgruppen terminierten Polyurethanpolymer mit einem titrimetrisch bestimmten Gehalt an freien Isocyanatgruppen von 1.88 Gew.-% umgesetzt. Anschliessend wurden 10 g Hydroxyethylmethacrylat (HEMA) zugegeben, welches mit den freien Isocyanatgruppen zum Elastomer **C1** der Formel (I) reagiert.

### Herstellung der Zusammensetzungen

Es wurden die folgenden Zusammensetzungen hergestellt:
Als jeweils zu prüfende Komponente **K1** wurden die in den Tabellen 2 und 3 aufgeführten Bestandteile in den angegebenen Mengen in einem Dissolver bei einer Temperatur von maximal 80 °C miteinander vermischt und eingerührt, bis eine makroskopisch homogene Paste erhalten wurde.

Als Komponente **K2** wurden 46.5 Gew.-% Dibenzoylperoxid (20 %-ig) in Weichmacher, 50 Gew.-% Kreide, 3 Gew.-% Thixotropiermittel und 0.5 Gew.-% eines Pigments in einem Dissolver miteinander vermischt. Diese Komponente **K2** wurde für alle Versuche gleich mit der jeweiligen Komponente **K1** aus Tabellen 2 und 3 verwendet.

Die hergestellten Komponenten **K1** und **K2** wurden in die getrennten Kammern von Koaxialkartuschen eingefüllt und bei der Anwendung in einem Volumenverhältnis **K1** : **K2** von 10 : 1 eingesetzt.

Zusätzlich wurde noch ein kommerzieller zweikomponentiger (Meth)acrylatklebstoff des Standes der Technik, SikaFast^{®}-5211 (Sika Schweiz) als Vergleich auf dieselbe Weise geprüft.

### Beschreibung der Prüfmethoden

Die **Zugfestigkeit** (Tensile Strength, "TS") und die **Bruchdehnung** (Elongation at Break, "Elong.") wurden bestimmt nach DIN EN 53504 (Zuggeschwindigkeit: 200 mm/min) an Filmen mit einer Schichtdicke von 2 mm, welche während 7 Tagen im Normklima (23±1 °C, 50±5% relative Luftfeuchtigkeit) aushärteten. Die Messungen erfolgten einerseits an Prüfkörpern, die bei einer Raumtemperatur von 23 °C gelagert worden waren («RT»), und zusätzlich an Prüfkörpern derselben Zusammensetzung, die nach dem Aushärten während 24h bei -20°C gelagert und direkt aus dem Kälteraum gemessen wurden («-20»).

Die Bruchdehnung ist ein direktes Mass der Elastizität einer gemessenen Probe. Proben, die bei der «RT»-Messung eine Bruchdehnung von mindestens 100% aufwiesen und gleichzeitig bei der «-20»-Messung eine Bruchdehnung von mindestens 20% aufwiesen, werden als erfindungsgemäss geeignet als erstes Verbindemittel angesehen. Die Resultate der Bruchdehnungsmessungen sind in Tabelle 4 zusammengefasst.

**Tabelle 2: Erfindungsgemässe Komponenten K1 (E1 bis E2) und Referenzkomponenten K1 (R1 bis R6). Alle Zahlen in Gewichtsprozent, bezogen auf die jeweilige Komponente K1.**

| **Beispiel** | **R1** | **E1** | **R2** | **R3** | **R4** | **R5** | **R6** | **E2** |
|---|---|---|---|---|---|---|---|---|
| GLYFOMA | 50 | 35 | 35 | 35 | 35 | - | - | - |
| LATEMA | - | 15 | - | - | - | 15 | - | 15 |
| MMA | - | - | - | - | - | 35 | - | - |
| BNMA | - | - | - | - | - | - | 50 | 35 |
| M131 | - | - | 15 | - | - | - | - | - |
| M193 | - | - | - | 15 | - | - | - | - |
| M 1053 | - | - | - | - | 15 | - | - | - |
| Inhibitor ¹ | 0.05 | 0.05 | 0.05 | 0.05 | 0.05 | 0.05 | 0.05 | 0.05 |
| Elastomer **C1** | 15 | 15 | 15 | 15 | 15 | 15 | 15 | 15 |
| Core-Shell ² | 15 | 15 | 15 | 15 | 15 | 15 | 15 | 15 |
| Füllstoff ³ | 18.97 | 18.97 | 18.97 | 18.97 | 18.97 | 18.97 | 18.97 | 18.97 |
| Aktivator ⁴ | 0.98 | 0.98 | 0.98 | 0.98 | 0.98 | 0.98 | 0.98 | 0.98 |

| | | | | | | | | |
|---|---|---|---|---|---|---|---|---|
| ¹ 2,6-Di-*tert*.butyl-p-Kresol; ² Kane Ace^{™} B382 (Kaneka); ³ Socal^{®} U1S2 (Solvay); ⁴ N,N-Bis-(2-Hydroxyethyl)-para-Toluidin. | | | | | | | | |

**Tabelle 3: Erfindungsgemässe Komponenten K1 (E3 bis E5) und Referenzkomponenten K1 (R7 bis R11). Alle Zahlen in Gewichtsprozent, bezogen auf die jeweilige Komponente K1.**

| **Beispiel** | **R7** | **E3** | **R8** | **R9** | **R10** | **E4** | **R11** | **E5** |
|---|---|---|---|---|---|---|---|---|
| GLYFOMA | - | - | - | - | - | - | 35 | 35 |
| LATEMA | - | 15 | - | 15 | - | 15 | - | - |
| THFMA | 50 | 35 | - | - | - | - | - | - |
| IBOMA | - | - | 50 | 35 | - | - | - | - |
| HEMA | - | - | - | - | 50 | 35 | - | - |
| STEMA | - | - | - | - | - | - | - | 15 |
| LAMA | - | - | - | - | - | - | 15 | - |
| Inhibitor ¹ | 0.05 | 0.05 | 0.05 | 0.05 | 0.05 | 0.05 | 0.05 | 0.05 |
| Elastomer **C1** | 15 | 15 | 15 | 15 | 15 | 15 | 15 | 15 |
| Core-Shell ² | 15 | 15 | 15 | 15 | 15 | 15 | 15 | 15 |
| Füllstoff ³ | 18.97 | 18.97 | 18.97 | 18.97 | 18.97 | 18.97 | 18.97 | 18.97 |
| Aktivator ⁴ | 0.98 | 0.98 | 0.98 | 0.98 | 0.98 | 0.98 | 0.98 | 0.98 |

| | | | | | | | | |
|---|---|---|---|---|---|---|---|---|
| ¹ 2,6-Di-*tert*.butyl-p-Kresol; ² Kane Ace^{™} B382 (Kaneka); ³ Socal^{®} U1S2 (Solvay); ⁴ N,N-Bis-(2-Hydroxyethyl)-para-Toluidin. | | | | | | | | |

**Tabelle 4: Messungen der Bruchdehnung bei Raumtemperatur (RT, 23°C) und bei -20°C (-20) aller hergestellter Zusammensetzungen. «n/m» bedeutet, dass die Probe so spröde war, dass keine Messung möglich war,**

| **Beispiel** | **R1** | **E1** | **R2** | **R3** | **R4** | **R5** | **R6** | **E2** |
|---|---|---|---|---|---|---|---|---|
| Elong. (RT) [%] | n/m | 153 | 186 | 208 | 61 | 300 | 260 | 380 |
| Elong. (-20) [%] | n/m | 40 | 5 | 7 | 11 | 4 | 3 | 26 |
| TS (RT) [MPa] | n/m | 7.3 | 7.8 | 5.7 | 7.6 | 10 | 8.2 | 4.8 |
| TS (-20) [MPa] | n/m | 15 | 17 | 13 | 17 | 23 | 21 | 14 |
| | | | | | | | | |

| **Beispiel** | **R7** | **E3** | **R8** | **R9** | **R10** | **E4** | **R11** | **E5** |
|---|---|---|---|---|---|---|---|---|
| Elong. (RT) [%] | 290 | 375 | n/m | 1.2 | 50 | 124 | 209 | 193 |
| Elong. (-20) [%] | 3 | 50 | n/m | n/m | 5 | 36 | 13 | 26 |
| TS (RT) [MPa] | 8.6 | 5.6 | n/m | 5.4 | 12 | 7.1 | 6.1 | 7.2 |
| TS (-20) [MPa] | 21 | 14 | n/m | n/m | 18 | 14 | 13 | 15 |

Der (Meth)acrylatklebstoff SikaFast^{®}-5211 des Standes der Technik (insbesondere WO 2014/184256 A1) wurde auf identische Weise geprüft und erzielte folgende Resultate:

| | |
|---|---|
| Elong. (RT) [%] | 250 |
| Elong. (-20) [%] | 13 |
| TS (RT) [MPa] | 12 |
| TS (-20) [MPa] | 29 |

Die Resultate in Tabelle 4 zeigen, dass nur die zweikomponentigen (Meth)acrylatklebstoffe mit den anspruchsgemäss definierten Bedingungen bezüglich Monomeren **A** und **B** zu ausreichender Elastizität bei Raumtemperatur und gleichzeitig ausreichender Tieftemperaturelastizität führen, um als erfindungsgemässes erstes Verbindemittel geeignet zu sein.
Dabei zeigen die erfindungsgemässen zweikomponentigen (Meth)acrylatklebstoffe auch deutlich verbesserte elastische Eigenschaften bei tiefen Temperaturen als der (Meth)acrylatklebstoff SikaFast^{®}-5211 des Standes der Technik.

## Patentansprüche

1. Verbundelement (10), insbesondere ein Verbundelement (10) für eine Isolierglasscheibe, wenigstens umfassend ein erstes Scheibenelement (20) und wenigstens ein zweites Scheibenelement (22) sowie wenigstens ein erstes Profilelement (30), wobei das Profilelement (30) wenigstens eine erste Verbindefläche (32) und/oder wenigstens eine zweite Verbindefläche (33) aufweist, wobei die erste und/oder die zweite Verbindefläche (32, 33) zur Applizierung und/oder Aufnahme eines ersten Verbindemittels (40) vorgesehen und beschaffen ist, wobei benachbart zur ersten Verbindefläche (32) eine dritte Verbindefläche (34) zur Applizierung und/oder Aufnahme eines zweiten Verbindemittels (50) und/oder benachbart zu zweiten Verbindefläche (33) eine vierte Verbindefläche (35) zur Applizierung und/oder Aufnahme eines zweiten Verbindemittels (50) vorgesehen ist und wobei das erste Scheibenelement (20) und das zweite Scheibenelement (22) mittels des Profilelementes (30) und des ersten Verbindemittels (40) und/oder des zweiten Verbindemittels (50) verbindbar oder verbunden sind, wobei das erste Verbindemittel (40) ein zweikomponentiger (Meth)acrylatklebstoff ist,
**dadurch gekennzeichnet, dass**
der zweikomponentige (Meth)acrylatklebstoff umfasst:
eine Komponente **K1**, umfassend
a) mindestens ein Monomer **A** nach Formel (IIIa), 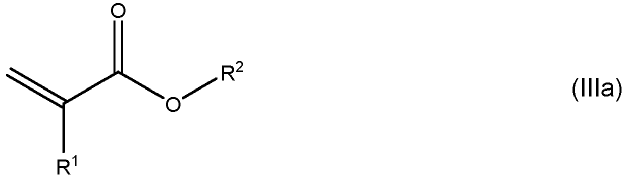
wobei R¹ entweder für ein Wasserstoffatom oder für eine Methylgruppe, bevorzugt eine Methylgruppe, steht;
R² entweder für eine lineare oder verzweigte Hydroxyalkylgruppe mit 2 bis 6 Kohlenstoffatomen steht oder für einen Rest mit 4 bis 8 Kohlenstoffatomen steht, der entweder eine Phenylgruppe oder einen aliphatischen 5- oder 6-Ring mit mindestens einem Ethersauerstoff in der Ringstruktur umfasst;
b) mindestens ein Monomer **B** nach Formel (IIIb), 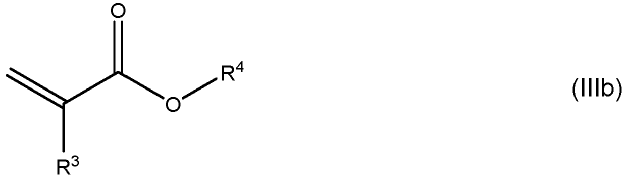
wobei R³ entweder für ein Wasserstoffatom oder für eine Methylgruppe, bevorzugt eine Methylgruppe, steht;
R⁴ für einen linearen Alkylrest mit mehr als 12 Kohlenstoffatomen in der Kette und bevorzugt höchstens 20 Kohlenstoffatomen in der Kette steht;
c) bevorzugt zwischen 10 Gew.-% und 20 Gew.-%, bezogen auf Komponente **K1,** mindestens eines Elastomers C der Formel (I), 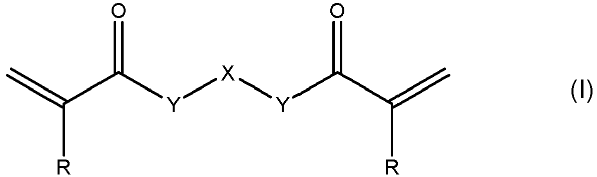
wobei R entweder für ein Wasserstoffatom oder für eine Methylgruppe steht;
X für ein polymeres Polyol nach Entfernung von zwei OH-Gruppen steht;
und Y für O oder NR" steht, wobei R" für einen Kohlenwasserstoffrest oder für ein Wasserstoffatom, bevorzugt für ein Wasserstoffatom, steht; sowie
d) bevorzugt mindestens ein Additiv ausgewählt aus der Gruppe bestehend aus Core-Shell-Polymer, Aktivator für radikalische Härtung, Inhibitor für radikalische Härtung, Füllstoff und Haftvermittler;
mit der Massgabe, dass Komponente **K1** zwischen 25 Gew.-% und 75 Gew.-%, bevorzugt zwischen 40 Gew.-% und 60 Gew.-%, bezogen auf Komponente **K1,** des Gemischs von Monomer **A** und Monomer **B** enthält, und
mit der Massgabe, dass das Massenverhältnis von Monomer **A** zu Monomer **B** in Komponente **K1** zwischen 1:1 und 9:1, bevorzugt zwischen 6:4 und 8:2 liegt;
sowie eine Komponente **K2,** umfassend mindestens einen Initiator für radikalische Härtung.

2. Verbundelement (10) nach Anspruch 1, **dadurch gekennzeichnet, dass** R² für eine Hydroxyethylgruppe oder für eine Benzylgruppe oder für mindestens eine der Gruppen (IVa) bis (IVc) in Formel (IV) steht, 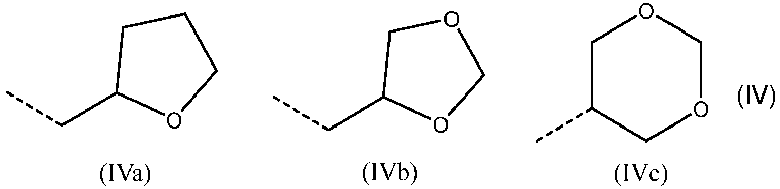 wobei die gestrichelten Linien in Formen (IV) die Bindung zwischen dem Sauerstoffatom und R² darstellen.

3. Verbundelement (10) nach Anspruch 1 oder 2, **dadurch gekennzeichnet**, **dadurch gekennzeichnet, dass** das Elastomer **C** ein Polyurethan(meth)-acrylat ist, insbesondere herstellbar aus der Reaktion von mindestens einem Diol **D,** insbesondere ein Polyoxypropylen-Diol, mit mindestens einem Diisocyanat und einem (Meth)acrylsäureester, welcher eine Hydroxylgruppe aufweist, wobei
- das Diol **D** mit einem Diisocyanat, insbesondere Isophorondiisocyanat, welches in stöchiometrischen Überschuss vorliegt, reagiert;
- und das resultierende Isocyanatgruppen terminierte Polyurethan mit dem (Meth)acrylsäureester, welcher eine Hydroxylgruppe aufweist, insbesondere mit einem Hydroxyalkyl(meth)acrylat, bevorzugt mit Hydroxyethylacrylat (HEA) oder Hydroxyethylmethacrylat (HEMA) zum Elastomer **C** der Formel (I) umgesetzt wird.

4. Verbundelement (10) nach einem der vorhergehenden Ansprüche, **dadurch gekennzeichnet, dass** das zweite Verbindemittel (50) zumindest teilweise Polyisobutylen (PIB) ist und/oder umfasst.

5. Verbundelement (10) nach einem der vorhergehenden Ansprüche, **dadurch gekennzeichnet, dass** die erste und/oder die zweite Verbindefläche (32, 33) zumindest teilweise als Vertiefung ausgebildet ist, insbesondere als eine Vertiefung ausgebildet ist, die derart beschaffen ist, dass sie gegenüber der dritten und/oder vierten Verbindefläche (34, 35) zurückgesetzt ist, insbesondere bezogen auf die Auflagefläche auf dem ersten bzw. zweiten Scheibenelement (20, 22) zurückgesetzt ist.

6. Verbundelement (10) nach einem der vorhergehenden Ansprüche, **dadurch gekennzeichnet, dass** das Profilelement (30) einen bezogen auf den Querschnitt kastenartigen Grundkörper (36) aufweist.

7. Verbundelement (10) nach Anspruch 6, **dadurch gekennzeichnet, dass** der Grundkörper (36) im Inneren zumindest teilweise hohl ist bzw. einen Hohlraum (37) aufweist und/oder ausbildet, wobei beispielsweise der Hohlraum (37) zumindest teilweise durchlässig und/oder perforiert ist und wobei weiter beispielsweise der Hohlraum (37) zumindest teilweise mit einem hygroskopischen Material ausgefüllt ist.

8. Verbundelement (10) nach Anspruch 6 oder 7, **dadurch gekennzeichnet, dass** an dem Grundkörper (36) ein erster Steg (38) und/oder ein zweiter Steg (39) angeformt ist, wobei zumindest eine Seitenwand des ersten Steges (38) zumindest teilweise die erste Verbindefläche (32) ausbildet und/oder wobei zumindest eine Seitenwand des zweiten Steges (39) zumindest teilweise die zweite Verbindefläche (33) ausbildet.

9. Verbundelement (10) nach einem der vorhergehenden Ansprüche, **dadurch gekennzeichnet, dass** das erste Scheibenelement (20) und das zweite Scheibenelement (22) zumindest teilweise aus Glas und das Profilelement (30) zumindest teilweise aus glasfaserverstärktem Werkstoff, insbesondere zumindest teilweise aus Glasfaserverbundwerkstoff, vorzugsweise zumindest teilweise aus glasfaserverstärktem Kunststoff besteht.

10. Isolierglasscheibe (100) mit wenigstens einem Verbundelement (10) nach einem der Ansprüche 1 bis 9.

11. Profilelement (30) mit den Profilelementmerkmalen nach einem der Ansprüche 1 bis 9.

12. Fenster mit wenigstens einem Verbundelement (10) nach einem der Ansprüche 1 bis 9 und/oder mit wenigstens einer Isolierglasscheibe nach Anspruch 10 und/oder mit wenigstens einem Profilelement (30) nach Anspruch 11.

13. Tür mit wenigstens einem Verbundelement (10) nach einem der Ansprüche 1 bis 9 und/oder mit wenigstens einer Isolierglasscheibe nach Anspruch 10 und/oder mit wenigstens einem Profilelement (30) nach Anspruch 11.

14. Verfahren zur Herstellung eines Verbundelementes (10), insbesondere eines Verbundelementes (10) für eine Isolierglasscheibe, wobei wenigstens ein erstes Scheibenelement (20) und wenigstens ein zweites Scheibenelement (22) sowie wenigstens ein erstes Profilelement (30) durch Klebung zusammengefügt werden, wobei das Profilelement (30) wenigstens eine erste Verbindefläche (32) und/oder wenigstens eine zweite Verbindefläche (33) aufweist, wobei die erste und/oder die zweite Verbindefläche (32, 33) zur Applizierung und/oder Aufnahme eines ersten Verbindemittels (40) vorgesehen und beschaffen ist, wobei benachbart zur ersten Verbindefläche (32) eine dritte Verbindefläche (34) zur Applizierung und/oder Aufnahme eines zweiten Verbindemittels (50) und/oder benachbart zu zweiten Verbindefläche (33) eine vierte Verbindefläche (35) zur Applizierung und/oder Aufnahme eines zweiten Verbindemittels (50) vorgesehen ist und wobei das erste Scheibenelement (20) und das zweite Scheibenelement (22) mittels des Profilelementes (30) und des ersten Verbindemittels (40) und gegebenenfalls des zweiten Verbindemittels (50) verbunden werden, wobei das Verbundelement (10) die Merkmale nach einem der Ansprüche 1 bis 9 aufweist.

15. Verfahren zur Herstellung einer Isolierglasscheibe (100) wobei wenigstens ein Verbundelement nach einem der Ansprüche 1 bis 9 oder ein Verbundelement (10) erhalten durch das Verfahren nach Anspruch 14 verwendet wird.
